# EUROPEAN PATENT APPLICATION

(11) **EP 3 196 500 A1**
(43) Date of publication of application: **26.07.2017**
(21) Application number: 15841929.1
(22) Date of filing: 09.09.2015
(51) Int. Cl.: F16F 1/387, E01D 19/04, F16F 1/40, F16F 15/04, F16F 15/08

(54) **VIBRATION DAMPING DEVICE FOR STRUCTURE**

(30) Priority: 19.09.2014 JP 2014191955
(71) Applicant: Oiles Corporation, Tokyo 108-0075 (JP)
(72) Inventor: UNO, Hiroshige, Osaka-shi Osaka 541-0053 (JP); SATO, Hidekazu, Tokyo 108-0075 (JP)
(74) Representative: J A Kemp
(86) International application number: PCT/JP2015/004590
(87) International publication number: WO 2016/042742

(57) **Abstract**

A vibration damping device for a structure 1 includes a circular tubular member 3 having a circular tubular inner peripheral surface 2; a columnar elongated member 6 which is disposed in the circular tubular member 3 relatively movably in a direction X with respect to the circular tubular member 3 and having a circular tubular outer peripheral surface 5; and a circular tubular elastic member 10 which has a circular tubular member outer peripheral surface 8 fixed to the inner peripheral surface 2 of the circular tubular member 3 and a circular tubular member inner peripheral surface 9 fixed to the circular tubular outer peripheral surface 5 of the elongated member 6, and which is disposed between the inner peripheral surface 2 of the circular tubular member 3 and the outer peripheral surface 5 of the elongated member 6.

## Description

### TECHNICAL FIELD

The present invention relates to a vibration damping device for a structure for damping vibration of a structure including a building, a bridge girder of such as a bridge or an expressway, and the like caused by an earthquake or the like.

### BACKGROUND ART

As vibration damping devices for structures, there are known a seismic isolation device which uses a hydraulic damper, a laminated rubber, or the like and an energy absorbing device for a structure which is comprised of a cylinder, a rod disposed in the cylinder, and a rubber body (elastic body) disposed between the cylinder and the rod, as described in Patent Document 1.

### PRIOR ART DOCUMENTS

### PATENT DOCUMENTS

Patent Document 1: JP-A-1991-338

### SUMMARY OF THE INVENTION

### PROBLEMS THAT THE INVENTION IS TO SOLVE

Incidentally, the energy absorbing device for a structure described in Patent Document 1 is adapted to absorb periodic energy by causing axial shear deformation to be generated in the rubber body. With such an energy absorbing device for a structure, however, large shear deformation is generated on the axial side of the rubber body, i.e., on the central side of the rubber body due to vibration in the axial direction, and early deterioration of the rubber body is likely to occur due to mechanical fatigue on the central side.

The present invention has been devised in view of the above-described aspects, and its object is to provide a vibration damping device for a structure which is capable of reducing the early deterioration of the elastic body by causing axial shear deformation to be generated in the elastic body uniformly from the central side to the outer peripheral side.

### MEANS FOR SOLVING THE PROBLEMS

In accordance with the present invention, there is provided a vibration damping device for a structure which is interposed between one structure and another structure disposed relatively movably with respect to the one structure so as to damp the relative vibration of the other structure with respect to the one structure in a relatively moving direction of the other structure with respect to the one structure, comprising: a tubular body; an elongated body disposed in the tubular body relatively movably with respect to the tubular body; and a tubular elastic body which has an outer peripheral surface fixed to an inner peripheral surface of the tubular body and an inner peripheral surface fixed to an outer peripheral surface of the elongated body, and which is disposed between the inner peripheral surface of the tubular body and the outer peripheral surface of the elongated body, wherein a shear modulus of elasticity of the elastic body becomes gradually smaller in a direction from the outer peripheral surface of the elongated body toward the inner peripheral surface of the tubular body.

According to this vibration damping device for a structure, the shear modulus of elasticity of the tubular elastic body, which is disposed between the inner peripheral surface of the tubular body and the outer peripheral surface of the elongated body by being fixed at the outer peripheral surface thereof to the inner peripheral surface of the tubular body while being fixed at the inner peripheral surface thereof to the outer peripheral surface of the elongated body, becomes smaller in a direction from the outer peripheral surface of the elongated body toward the inner peripheral surface of the tubular body. Therefore, in the shear deformation of the elastic body in the relative movement of the other structure with respect to one structure, it is possible to reduce the difference between the amount of shear deformation of the elastic body on the outer peripheral surface side of the elongated body and the amount of shear deformation in the moving direction of the elastic body on the inner peripheral surface side of the tubular body, making it possible to reduce early deterioration of the outer peripheral surface side of the elongated body due to the mechanical fatigue of the elastic body.

In a preferred example of the present invention, the tubular body is constituted by a tubular member having a circular tubular inner peripheral surface or a rectangular tubular inner peripheral surface, and the elongated body is constituted by an elongated member having at least one of a circular tubular outer peripheral surface and a rectangular tubular outer peripheral surface. However, the tubular body may be constituted by a tubular member has a rectangular tubular inner peripheral surface, and the elongated body may be an elongated member having, on the whole, a circular tubular outer peripheral surface or a rectangular tubular outer peripheral surface or an elongated member partially having a circular tubular outer peripheral surface or a rectangular tubular outer peripheral surface.

In a preferred example of the present invention, the tubular body includes a cylindrical small-diameter inner peripheral surface, a cylindrical large-diameter inner peripheral surface larger in diameter than the small-diameter inner peripheral surface, and cylindrical internally threaded inner peripheral surface which sandwiches the large-diameter inner peripheral surface in the moving direction in cooperation with the small-diameter inner peripheral surface and on which an internal thread is formed, and the elastic body at the outer peripheral surface thereof is disposed in contact with the large-diameter inner peripheral surface of the tubular body, is sandwiched in the moving direction between the tubular body at the small-diameter inner peripheral surface thereof and an annular internal-thread meshing member meshing with the internally threaded inner peripheral surface, and is fixed at the outer peripheral surface thereof to the tubular body immovably in the moving direction with respect to the tubular body. In another preferred example of the invention, the tubular body includes a cylindrical inner peripheral surface and a pair of internally threaded inner peripheral surfaces which sandwich the inner peripheral surface in the moving direction and on each of which an internal thread is formed, and the elastic body at the outer peripheral surface thereof is disposed in contact with the inner peripheral surface of the tubular body, is sandwiched in the moving direction between a pair of internal-thread meshing members meshing with the pair of internally threaded inner peripheral surfaces, and is fixed at the outer peripheral surface thereof to the tubular body immovably in the moving direction with respect to the tubular body.

In addition, in still another preferred example of the invention, the elongated body includes a cylindrical large-diameter outer peripheral surface, a cylindrical small-diameter outer peripheral surface smaller in diameter than the large-diameter outer peripheral surface, and a cylindrical externally threaded outer peripheral surface which sandwiches the small-diameter outer peripheral surface in the moving direction in cooperation with the large-diameter outer peripheral surface and on which an external thread is formed, and the elastic body at the inner peripheral surface thereof is disposed in contact with the small-diameter outer peripheral surface, is sandwiched in the moving direction between the elongated body at the inner peripheral surface thereof and an external-thread meshing member meshing with the externally threaded outer peripheral surfaces, and is fixed at the inner peripheral surface thereof to the elongated body immovably in the moving direction with respect to the elongated body.

In a further preferred example of the invention, the elastic body includes a plurality of cylindrical elastic layers disposed concentrically with each other and a plurality of rigid layers which are alternately arranged with the plurality of elastic layers in a radial direction perpendicular to the moving direction, an outermost one of the plurality of rigid layers has the outer peripheral surface fixed to the inner peripheral surface of the tubular body, and an innermost one of the plurality of rigid layers has the inner peripheral surface fixed to the outer peripheral surface of the elongated body. In such an example, at least one of the outermost and innermost rigid layers may be constituted by a circular tubular or a rectangular tubular rigid plate, intermediate rigid layers excluding the outermost rigid layer and the innermost rigid layer among the plurality of rigid layers may be constituted by at least one of circular tubular rigid plates and strip-shaped rigid plates, and such strip-shaped rigid plates may be arranged in such a manner as to surround the elongated body.

Among the plurality of elastic layers, in a preferred example of the invention, one elastic layer may have a shear modulus of elasticity which is smaller than the shear modulus of elasticity of another elastic layer disposed more inwardly of the one elastic layer in a radial direction directed from the outer peripheral surface of the elongated body toward the inner peripheral surface of the tubular body, or may have a radial thickness which is greater than the radial thickness of another elastic layer disposed more inwardly of the one elastic layer in the radial direction directed from the outer peripheral surface of the elongated body toward the inner peripheral surface of the tubular body.

In the present invention, the elastic body may include a first elastic body portion and a second elastic body portion arranged in the moving direction and a plastically deformable metallic body interposed between the first elastic body portion and the second elastic body portion in the moving direction, respective shear modulus of elasticity of the first elastic body portion and the second elastic body portion may become smaller in the direction from the outer peripheral surface of the elongated body toward the inner peripheral surface of the tubular body, the metallic body may have one end face in the moving direction brought into contact with one end face in the moving direction of the first elastic body portion and another end face in the moving direction brought into contact with one end face in the moving direction of the second elastic body portion, and may be sandwiched in the moving direction by the first elastic body portion and the second elastic body portion. In this case, at least one of the first elastic body portion and the second elastic body portion may include a plurality of cylindrical elastic layers disposed concentrically with each other and a plurality of rigid layers which are alternately arranged with the plurality of elastic layers in a radial direction perpendicular to the moving direction, an outermost one of the plurality of rigid layers of the at least one of the first elastic body portion and the second elastic body portion may have the outer peripheral surface fixed to the inner peripheral surface of the tubular body, and an innermost one of the plurality of rigid layers of the at least one of the first elastic body portion and the second elastic body portion may have the inner peripheral surface fixed to the outer peripheral surface of the elongated body. In addition, the outermost and innermost rigid layers of the at least one of the first elastic body portion and the second elastic body portion may be constituted by circular tubular rigid plates; the outermost and innermost rigid layers of the at least one of the first elastic body portion and the second elastic body portion may be constituted by rectangular tubular rigid plates; and intermediate rigid layers excluding the outermost rigid layer and the innermost rigid layer among the plurality of rigid layers of the at least one of the first elastic body portion and the second elastic body portion may be constituted by at least one of circular tubular rigid plates and strip-shaped rigid plates. In this case, the strip-shaped rigid plates may be arranged in such a manner as to surround the elongated body; among the plurality of elastic layers of the at least one of the first elastic body portion and the second elastic body portion, one elastic layer may have a shear modulus of elasticity smaller than the shear modulus of elasticity of an elastic layer disposed radially inwardly of the one elastic layer, or may have a radial thickness which is greater than the radial thickness of another elastic layer disposed more inwardly of the one elastic layer in the radial direction directed from the outer peripheral surface of the elongated body toward the inner peripheral surface of the tubular body.

In the present invention, the metallic body is constituted by at least one of an annular lead plate having lead as a principal component and an annular tin plate having tin as a principal component. In the case of the lead plate, it is sufficient to use lead with a purity of 99.9% or higher, and, in the case of the tin plate, it is also sufficient to use tin with a purity of 99.9% or higher. However, the present invention is not limited to these, and the metallic body may be formed of a metal or an alloy which is plastically deformable, exhibits high deformation energy absorbability in plastic deformation, and is recrystallizable under normal temperature when returning to the original shape after the plastic deformation. The metallic body in a preferred example is constituted by a circular plate or a rectangular plate.

In the present invention, a more satisfactory damping effect can be obtained with respect to the vibration by the provision of the above-described metallic body.

In the present invention, the tubular body may be adapted to be connected to the one structure, and the elongated body may be adapted to be connected to the other structure at a projecting portion thereof projecting outside the tubular body. Alternatively, however, the above-described vibration damping device for a structure of the invention in which the elongated body is adapted to be connected to the one structure at a projecting portion thereof projecting outside the tubular body, may further comprise: another elongated body disposed in the tubular body relatively movably in the moving direction with respect to the tubular body, and arranged in series to the elongated body in the moving direction; and another annular elastic body which is fixed at an outer peripheral surface thereof to the inner peripheral surface of the tubular body and fixed at an inner peripheral surface thereof to an outer peripheral surface of the other elongated body and which is disposed between the inner peripheral surface of the tubular body and the outer peripheral surface of the elongated body, the other elongated body being adapted to be connected to the other structure at a projecting portion thereof projecting outside the tubular body.

In the vibration damping device for a structure of the invention further comprising another elongated body and another annular elastic body which is fixed at an outer peripheral surface thereof to the inner peripheral surface of the tubular body and fixed at an inner peripheral surface thereof to an outer peripheral surface of the other elongated body and which is disposed between the inner peripheral surface of the tubular body and the outer peripheral surface of the elongated body, it is possible to obtain the shear deformation of the other elastic body in addition to the shear deformation of the elastic body. Consequently, it is possible to cope with large relative movement of the other structure with respect to the one structure and cope with vibration of a large amplitude.

In the vibration damping device for a structure of the invention further comprising such another elongated body and such another annular elastic body, in a preferred example, the other elastic body has a shear modulus of elasticity which becomes smaller in the direction from the outer peripheral surface of the other elongated body toward the inner peripheral surface of the tubular body, and the other elongated body is constituted by an elongated member having at least one of a circular tubular outer peripheral surface and a rectangular tubular outer peripheral surface. In such an example as well, the other elongated body may be an elongated member having, on the whole, a circular tubular outer peripheral surface or a rectangular tubular outer peripheral surface or an elongated member partially having a circular tubular outer peripheral surface or a rectangular tubular outer peripheral surface.

In the present invention, in a preferred example, the rigid layer and the rigid plate are constituted by steel plates, and the elastic layer is formed of rubber, but the rigid layer and the rigid plate are not limited to steel plates, and may be constituted by fiber-reinforced synthetic resin plates formed of such as carbon fibers, glass fibers, or aramid fibers, or fiber-reinforced hard rubber plates or the like. Furthermore, the number of rigid layers is not particularly limited. Meanwhile, the rubber of the elastic layers may be formed of at least one of natural rubber and synthetic rubber, or a high damping rubber in which carbon black or a resin-based material is filled in at least one of the natural rubber and the synthetic rubber.

### ADVANTAGES OF THE INVENTION

According to the present invention, it is possible to provide a vibration damping device for a structure which is capable of reducing the early deterioration of the elastic body by causing axial shear deformation to be generated in the elastic body uniformly from the central side to the outer peripheral side.

### BRIEF DESCRIPTION OF THE DRAWINGS

Fig. 1 is an explanatory cross-sectional view of a preferred embodiment of the invention;
Fig. 2 is an explanatory cross-sectional view, taken in the direction of arrows along line II - II, of the embodiment shown in Fig. 1;
Fig. 3 is an explanatory perspective view of an elastic body of the embodiment shown in Fig. 1;
Fig. 4 is a diagram for explaining the operation of the embodiment shown in Fig. 1;
Fig. 5 is an explanatory cross-sectional view, taken in the direction of arrows, of another preferred embodiment of the invention, and corresponds to the cross-sectional arrow view shown in Fig. 2;
Fig. 6 is an explanatory cross-sectional view of still another preferred embodiment of the invention;
Fig. 7 is an explanatory cross-sectional view of a further preferred embodiment of the invention; and
Fig. 8 is a diagram for explaining the operation of the embodiment shown in Fig. 7.

### MODE FOR CARRYING OUT THE INVENTION

Next, a more detailed description will be given of a mode for carrying out the invention with reference to the preferred embodiments illustrated in the drawings. It should be noted that the invention is not limited to these embodiments.

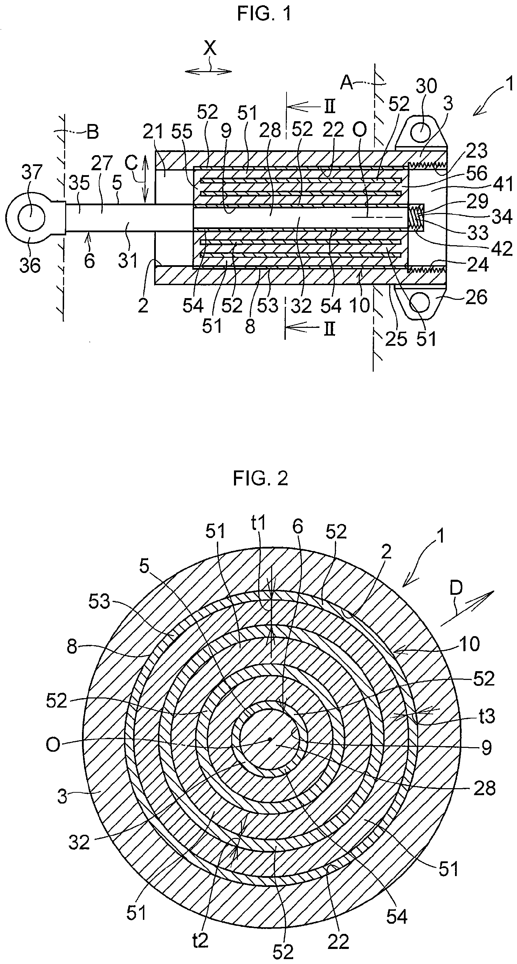

In Figs. 1 to 3, a vibration damping device for a structure 1 in accordance with this embodiment is interposed between one structure, e.g., a foundation or bridge pier A which is constructed on the ground, and another structure, e.g., a bridge girder B which is disposed relatively movably with respect to the bridge pier A, so as to damp the relative vibration in a direction X of the bridge girder B with respect to the bridge pier A in the direction X which is a relatively moving direction of the bridge girder B with respect to the bridge pier A. This vibration damping device for a structure 1 is comprised of a circular tubular member 3 which is a tubular member having a circular tubular inner peripheral surface 2 and serves as a tubular body; a columnar elongated member 6 which is disposed in the circular tubular member 3 relatively movably in the direction X with respect to the circular tubular member 3 and serves as an elongated body having a circular tubular outer peripheral surface 5; and a tubular, i.e., in this embodiment, circular tubular, elastic body 10 which has a cylindrical outer peripheral surface 8 fixed to the inner peripheral surface 2 of the circular tubular member 3 and a cylindrical inner peripheral surface 9 fixed to the circular tubular outer peripheral surface 5 of the elongated member 6, and which is disposed between the inner peripheral surface 2 of the circular tubular member 3 and the outer peripheral surface 5 of the elongated member 6.

The inner peripheral surface 2 of the circular tubular member 3 includes a cylindrical small-diameter inner peripheral surface 21, a cylindrical large-diameter inner peripheral surface 22 larger in diameter than the small-diameter inner peripheral surface 21, and cylindrical internally threaded inner peripheral surface 24 which sandwiches the large-diameter inner peripheral surface 22 in the axial direction X in cooperation with the small-diameter inner peripheral surface 21 and on which an internal thread 23 is formed. The circular tubular member 3 has a mounting plate 26 formed integrally on a circular tubular outer peripheral surface 25 thereof, and is adapted to be connected to the bridge pier A through a bolt inserted in a through hole 30 of the mounting plate 26.

The elongated member 6 consists of a large-diameter column portion 27, a small-diameter column portion 28 formed integrally at one end in the direction X of the large-diameter column portion 27 and smaller in diameter than the large-diameter column portion 27, and a threaded column portion 29 formed integrally at one end in the direction X of the small-diameter column portion 28. The outer peripheral surface 5 of the elongated member 6 includes a cylindrical large-diameter outer peripheral surface 31 of the large-diameter column portion 27, a cylindrical small-diameter outer peripheral surface 32 of the small-diameter column portion 28 smaller in diameter than the large-diameter outer peripheral surface 31, and a cylindrical externally threaded outer peripheral surface 34 of the threaded column portion 29 which sandwiches the small-diameter outer peripheral surface 32 in the axial direction X in cooperation with the large-diameter outer peripheral surface 31 and on which an external thread 33 is formed. The elongated member 6 has a mounting plate 36 formed integrally on a projecting portion 35 of the large-diameter column portion 27 projecting outside the circular tubular member 3, and is adapted to be connected to the bridge girder B via a bolt inserted in a through hole 37 of the mounting plate 36. Thus, the elongated member 6 is adapted to be connected to the bridge girder B via the mounting plate 36 at the projecting portion 35 thereof projecting outside the circular tubular member 3.

The elastic body 10 at the outer peripheral surface 8 thereof is disposed in contact with the large-diameter inner peripheral surface 22 of the circular tubular member 3, is sandwiched in the direction X between the circular tubular member 3 at the small-diameter inner peripheral surface 21 thereof and an annular internal-thread meshing member 41 meshing with the internally threaded inner peripheral surface 24, and is thereby fixed at the outer peripheral surface 8 thereof to the circular tubular member 3 immovably in the direction X with respect to the circular tubular member 3. Meanwhile, the elastic body 10 at the inner peripheral surface 9 thereof is disposed in contact with the small-diameter outer peripheral surface 32, is sandwiched in the direction X between the elongated member 6 at the large-diameter outer peripheral surface 31 thereof and an annular external-thread meshing member 42 meshing with the externally threaded outer peripheral surface 34, and is thereby fixed at the inner peripheral surface 9 thereof to the elongated member 6 immovably in the direction X with respect to the elongated member 6.

The elastic body 10 includes a plurality of cylindrical elastic layers 51 formed of rubber, arranged concentrically with each other about an axis O of the elongated member 6 in a radial direction C perpendicular to the axis X and at equal intervals in the radial direction C, and respectively having a mutually identical thickness t1 in the radial direction C; a plurality of rigid layers 52 respectively formed of cylindrical rigid plates and arranged alternately with the plurality of elastic layers 51 and at equal intervals in the radial direction C and concentrically with each other about the axis O; an annular coating layer 55 formed integrally on one end faces in the direction X of the elastic layers 51 in such a manner as to cover one ends in the direction X of intermediate rigid layers 52 excluding an outermost and an innermost rigid layer 53 and 54 among the plurality of rigid layers 52; and an annular coating layer 56 similarly formed integrally on other end faces in the direction X of the elastic layers 51 in such a manner as to cover other ends in the direction X of intermediate rigid layers 52 excluding the outermost and the innermost rigid layer 53 and 54 among the plurality of rigid layers 52. These elastic layers 51 and coating layers 55 and 56 are vulcanized and bonded to corresponding ones of the rigid layers 52, and the outermost rigid layer 53 has the outer peripheral surface 8 fixed in contact with the large-diameter inner peripheral surface 22 of the circular tubular member 3, while the innermost rigid layer 54 has the inner peripheral surface 9 fixed in contact with the small-diameter outer peripheral surface 32 of the elongated member 6.

Among the plurality of rigid layers 52, each of the intermediate rigid layers 52 has a mutually identical thickness t2 in the radial direction C, while each of the outermost and innermost rigid layers 53 and 54 has a mutually identical thickness t3 in the radial direction C smaller than the thickness t2.

The plurality of elastic layers 51 have shear modulus of elasticity which become sequentially smaller from the inner side toward the outer side in a radial direction D directed from the small-diameter outer peripheral surface 32 of the elongated member 6 toward the large-diameter inner peripheral surface 22 of the circular tubular member 3. Thus, among the plurality of elastic layers 51, one elastic layer 51 has a shear modulus of elasticity smaller than the shear modulus of elasticity of another elastic layer 51 disposed inwardly in the radial direction D of that elastic layer 51, and therefore the shear modulus of elasticity of the elastic body 10 becomes smaller in steps from the small-diameter outer peripheral surface 32 of the elongated member 6 toward the large-diameter inner peripheral surface 22 of the circular tubular member 3.

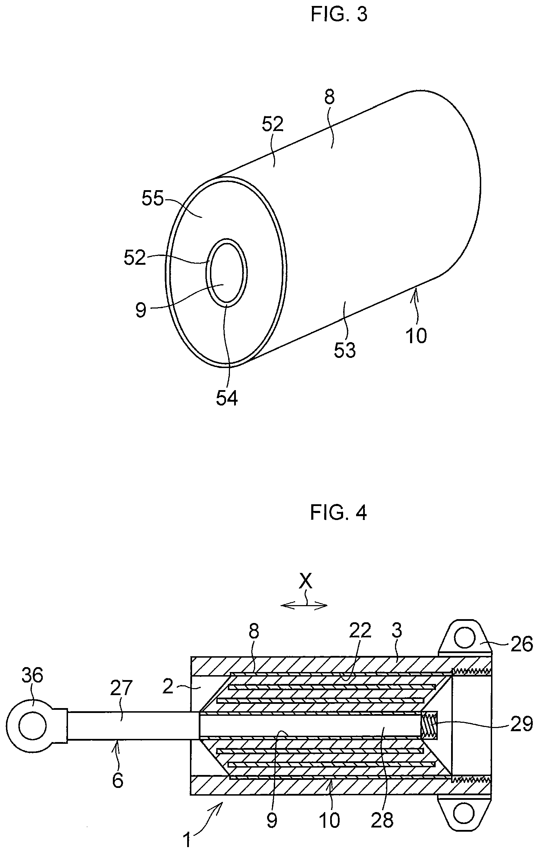

In the above-described vibration damping device for a structure 1, when the bridge girder B relatively moves in one direction in the direction X with respect to the bridge pier A due to an earthquake or the like, as shown in Fig. 4, the elongated member 6 is relatively moved in the same one direction in the direction X with respect to the circular tubular member 3, causing the elastic body 10 to undergo shear deformation in the one direction in the direction X. Hence, the relative movement of the bridge girder B in the direction X with respect to the bridge pier A is attenuated by this shear deformation of the elastic body 10. In consequence, the relative movement in the one and other directions in the direction X, i.e., the vibration in the direction X, of the bridge girder B with respect to the bridge pier A is damped.

Further, in the vibration damping device for a structure 1, the shear modulus of elasticity of the elastic body 10, which is disposed between the large-diameter inner peripheral surface 22 of the circular tubular member 3 and the small-diameter outer peripheral surface 32 of the elongated member 6 by being fixed at the outer peripheral surface 8 to the large-diameter inner peripheral surface 22 of the inner peripheral surface 2 of the circular tubular member 3 while being fixed at the inner peripheral surface 9 to the small-diameter outer peripheral surface 32 of the outer peripheral surface 5 of the elongated member 6, becomes smaller in steps in a direction from the small-diameter outer peripheral surface 32 of the elongated member 6 toward the large-diameter inner peripheral surface 22 of the circular tubular member 3. Therefore, in the shear deformation of the elastic body 10 in the relative movement in the direction X of the structure B with respect to the structure A, it is possible to reduce the difference between the amount of shear deformation in the direction X of the elastic body 10 on the small-diameter outer peripheral surface 32 side of the elongated member 6 and the amount of shear deformation in the direction X of the elastic body 10 on the large-diameter inner peripheral surface 22 side of the circular tubular member 3, making it possible to reduce early deterioration of the small-diameter outer peripheral surface 32 side of the elongated member 6 due to the mechanical fatigue of the elastic body 10.

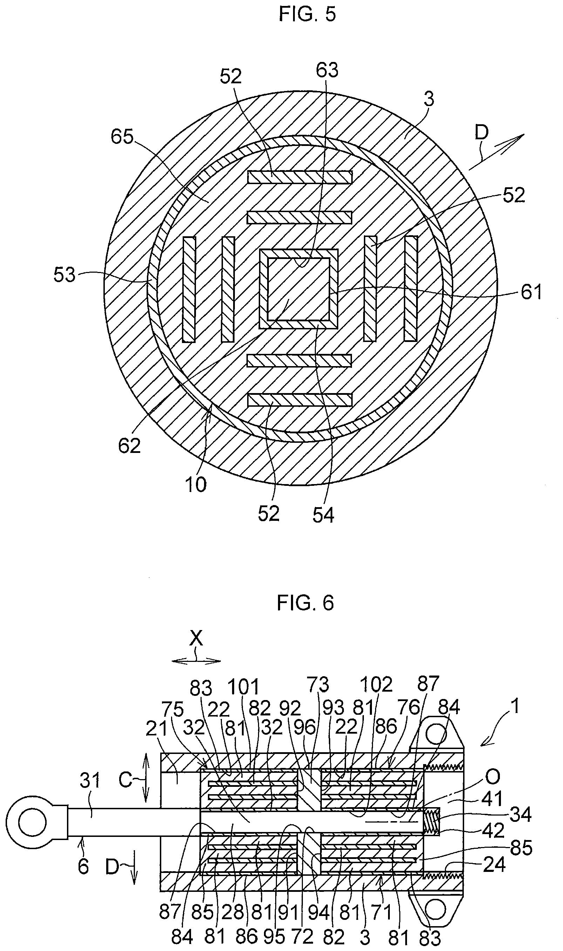

Incidentally, in the above-described vibration damping device for a structure 1, the elongated body is formed by the elongated member 6 consisting of the large-diameter column portion 27, the small-diameter column portion 28, and the threaded column portion 29. However, as shown in Fig. 5, the elongated body may be formed by the elongated member 6 including, in substitution of the small-diameter column portion 28 disposed between the large-diameter column portion 27 and the threaded column portion 29 in the direction X, a quadrangular column portion 62 which is square in cross section and has a square tubular outer peripheral surface 61 between the large-diameter column portion 27 and the threaded column portion 29 in the direction X.

In the case of the embodiment shown in Fig. 5, the innermost rigid layer 54 is constituted by a rectangular tubular rigid plate having a square tubular inner peripheral surface 63 which has a shape similar to that of the square tubular outer peripheral surface 61 and is brought into contact with the outer peripheral surface 61. In addition, in the case of the embodiment shown in Fig. 5, although the intermediate rigid layers 52 may be constituted by circular tubular rigid plates, the intermediate rigid layers 52 may alternatively be constituted by a plurality of strip-shaped rigid plates arranged in such a manner as to surround the quadrangular column portion 62 of the elongated member 6, as shown in Fig. 5. Additionally, in the case where the intermediate rigid layers 52 are constituted by the plurality of strip-shaped rigid plates, the elastic body 10 may, instead of providing the plurality of elastic layers 51, be constituted by a columnar elastic member 65 in which the intermediate rigid layers 52 constituted by the plurality of strip-shaped rigid plates are embedded by being vulcanized and bonded thereto. Such an elastic member 65 may be formed with a shear modulus of elasticity which becomes gradually smaller in the radial direction D, and the intermediate rigid layers 52 constituted by the plurality of strip-shaped rigid plates and the columnar elastic member 65 may be applied to the vibration damping device for a structure 1 shown in Figs. 1 to 3.

Furthermore, in the above-described vibration damping device for a structure 1, the inner peripheral surface 2 of the circular tubular member 3 includes the small-diameter inner peripheral surface 21, the large-diameter inner peripheral surface 22, and the internally threaded inner peripheral surface 24, and the elastic body 10 is fixed at the outer peripheral surface 8 thereof to the circular tubular member 3 immovably in the direction X with respect to the circular tubular member 3 by the circular tubular member 3 at the small-diameter inner peripheral surface 21 thereof and by the internal-thread meshing member 41 meshing with the internally threaded inner peripheral surface 24. However, the inner peripheral surface 2 of the circular tubular member 3 may be formed by, instead of such a small-diameter inner peripheral surface 21, another internally threaded inner peripheral surface having a diameter to that of the internally threaded inner peripheral surface 24 and formed in the same way, the internally threaded inner peripheral surface 24, and the large-diameter inner peripheral surface 22 serving as an inner peripheral surface sandwiched by the other internally threaded inner peripheral surface and the internally threaded inner peripheral surface 24 in the direction X. In this case, the elastic body 10 at the outer peripheral surface 8 thereof is disposed in contact with the large-diameter inner peripheral surface 22 serving as the inner peripheral surface of the circular tubular member 3, is sandwiched in the direction X by an internal-thread meshing member equivalent to the internal-thread meshing member 41 meshing with the other internally threaded inner peripheral surface and by the internal-thread meshing member 41 meshing with the internally threaded inner peripheral surface 24, and is thereby fixed at the outer peripheral surface 8 thereof to the circular tubular member 3 immovably in the direction X with respect to the circular tubular member 3.

Incidentally, with the above-described vibration damping device for a structure 1, since the relative vibration in the direction X of the bridge girder B with respect to the bridge pier A is damped by the shear modulus of elasticity of the elastic body 10, it is not possible to obtain an especially remarkable damping effect. Nevertheless, as shown in Fig. 6, an elastic body 71 may include a disk, i.e., an annular lead plate 73, which is a plastically deformable metallic body and has in its center a through hole 72 through which the small-diameter column portion 28 of the elongated member 6 is passed, as well as elastic body portions 75 and 76 arranged in such a manner as to sandwich the lead plate 73 in the direction X therebetween.

In the same way as the elastic body 10, each of the elastic body portions 75 and 76 includes a plurality of cylindrical elastic layers 81 formed of rubber, arranged concentrically with each other about the axis O of the elongated member 6 in the radial direction C and at equal intervals in the radial direction C, and respectively having a mutually identical thickness t1 in the radial direction C; a plurality of rigid layers 82 respectively formed of cylindrical rigid plates and arranged alternately with the plurality of elastic layers 81 and at equal intervals in the radial direction C and concentrically with each other about the axis O; and an annular coating layer 85 formed integrally on one end faces in the direction X of the elastic layers 81 in such a manner as to cover one ends in the direction X of intermediate rigid layers 82 excluding an outermost and an innermost rigid layer 83 and 84 among the plurality of rigid layers 82. Each of the outermost rigid layers 83 has an outer peripheral surface 86 fixed in contact with the large-diameter inner peripheral surface 22 of the circular tubular member 3, while each of the innermost rigid layers 84 has an inner peripheral surface 87 fixed in contact with the small-diameter outer peripheral surface 32 of the elongated member 6. The lead plate 73 is sandwiched by the elastic body portions 75 and 76 in the direction X, such that the lead plate 73 at one annular end face 91 thereof in the direction X is in contact with one annular end face 92 in the direction X of the elastic body portion 75 where one annular end faces in the direction X of the plurality of rigid layers 82 of the elastic body portion 75 are exposed, while the lead plate 73 at another annular end face 93 thereof in the direction X is in contact with one annular end face 94 in the direction X of the elastic body portion 76 where one annular end faces in the direction X of the plurality of rigid layers 82 of the elastic body portion 76 are exposed. Among the plurality of rigid layers 82 of the respective elastic body portions 75 and 76, each of the intermediate rigid layers 82 has a mutually identical thickness t2 in the radial direction C, while each of the outermost and innermost rigid layers 83 and 84 has a mutually identical thickness t3 in the radial direction C smaller than the thickness t2. Similarly, the plurality of elastic layers 81 of the respective elastic body portions 75 and 76 also have a shear modulus of elasticity which become sequentially smaller from the inner side toward the outer side in a radial direction D directed from the small-diameter outer peripheral surface 32 of the elongated member 6 toward the large-diameter inner peripheral surface 22 of the circular tubular member 3. Thus, among the plurality of elastic layers 81 of the respective elastic body portions 75 and 76, one elastic layer 81 has a shear modulus of elasticity smaller than the shear modulus of elasticity of another elastic layer 81 disposed radially inwardly of the one elastic layer 81, and therefore respective shear modulus of elasticity of the elastic body portions 75 and 76 and the shear modulus of elasticity of the elastic body 71 constituted by elastic body portions 75 and 76 become smaller in steps from the small-diameter outer peripheral surface 32 of the elongated member 6 toward the large-diameter inner peripheral surface 22 of the circular tubular member 3.

The lead plate 73 is interposed between the elastic body portions 75 and 76 in the direction X, such that the lead plate 73 at an annular inner peripheral surface 95 thereof defining the throughhole 72 is in contact with the small-diameter outer peripheral surface 32 of the elongated member 6, while the lead plate 73 at an annular outer peripheral surface 96 thereof is in contact with the large-diameter inner peripheral surface 22 of the circular tubular member 3.

In the same way as the vibration damping device for a structure 1 shown Figs. 1 to 3, the vibration damping device for a structure 1 shown in Fig. 6 also includes the circular tubular member 3 having the small-diameter inner peripheral surface 21, the large-diameter inner peripheral surface 22, and the internally threaded inner peripheral surface 24; the elongated member 6 having the large-diameter outer peripheral surface 31, the small-diameter outer peripheral surface 32, and the externally threaded outer peripheral surface 34; the internal-thread meshing member 41 meshing with the internally threaded inner peripheral surface 24; and the external-thread meshing member 42 meshing with the externally threaded outer peripheral surface 34. On the side of an outer peripheral surface 101 consisting of the pair of outer peripheral surface 86 and outer peripheral surface 96, the elastic body 71 is sandwiched by the circular tubular member 3 at the small-diameter inner peripheral surface 21 and by the internal-thread meshing member 41, while, on the side of an inner peripheral surface 102 consisting of the pair of inner peripheral surface 87 and inner peripheral surface 95, the elastic body 71 is sandwiched by the elongated member 6 at the large-diameter outer peripheral surface 31 and by the annular external-thread meshing member 42 meshing with the externally threaded outer peripheral surface 34. In consequence, the elastic body 71 on the outer peripheral surface 101 thereof is fixed immovably to the circular tubular member 3 in the direction X with respect to the circular tubular member 3, while the elastic body 71 on the inner peripheral surface 102 thereof is fixed immovably to the elongated member 6 in the direction X with respect to the elongated member 6. Also in such a vibration damping device for a structure 1 shown in Fig. 6, when the bridge pier B, to which the elongated member 6 is connected via the mounting plate 36 formed integrally on the projecting portion 35 of the elongated member 6, relatively moves in one direction in the direction X with respect to the bridge pier A, to which the circular tubular member 3 is connected via the mounting plate 26 formed integrally on the outer peripheral surface 25 of the circular tubular member 3, the elastic body 71 in the same way as in Fig. 4 is caused to undergo shear deformation in the one direction in the direction X, and the relative movement of the bridge girder B in the direction X with respect to the bridge pier A is attenuated by this shear deformation. In consequence, the relative movement in the one and other directions in the direction X, i.e., the vibration in the direction X, of the bridge girder B with respect to the bridge pier A is damped. Moreover, the lead plate 73 is also caused to undergo plastic deformation in the one and other directions by the vibration. As a result, according to the vibration damping device for a structure 1 shown in Fig. 6, in the same way as the vibration damping device for a structure 1 shown in Figs. 1 to 3, it is possible to reduce the difference between the amount of shear deformation in the direction X of the elastic body 71 on the small-diameter outer peripheral surface 32 side of the elongated member 6 and the amount of shear deformation in the direction X of the elastic body 71 on the large-diameter inner peripheral surface 22 side of the circular tubular member 3, making it possible to reduce early deterioration of the small-diameter outer peripheral surface 32 side of the elongated member 6 due to the mechanical fatigue of the elastic body 71. Furthermore, in comparison with the vibration damping device for a structure 1 shown in Figs. 1 to 3, the relative vibration in the direction X of the bridge girder B with respect to the bridge pier A can be damped in an earlier period by the plastic deformation of the lead plate 73.

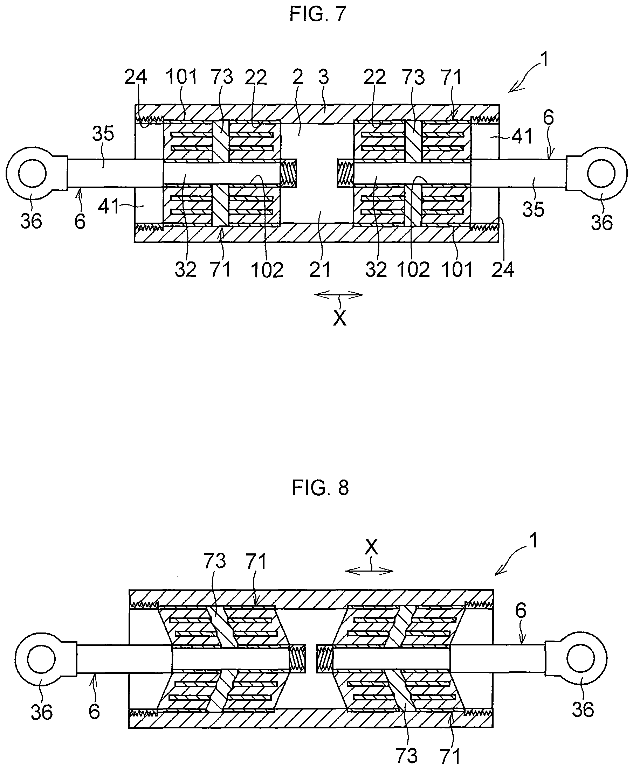

Incidentally, although, in any one of the above-described vibration damping devices for a structure 1, one elastic body 10 or 71 is adapted to be interposed between the bridge pier A and the bridge girder B which are relatively moved in the direction X, two elastic bodies 71 may alternatively be interposed in series in the direction X between the bridge pier A and the bridge girder B which are relatively moved in the direction X, as shown in Fig. 7. The vibration damping device for a structure 1 shown in Fig. 7 is comprised of a pair of elongated members 6 disposed in the circular tubular member 3 relatively movably in the direction X with respect to the circular tubular member 3 and arranged in series in the direction X; and a pair of elastic bodies 71 which are disposed between the large-diameter inner peripheral surface 22 of the circular tubular member 3 and the small-diameter outer peripheral surface 32 of the corresponding elongated member 6 by being each fixed at the respective outer peripheral surface 101 thereof in contact with the large-diameter inner peripheral surface 22 of the circular tubular member 3 and by being each fixed at the respective inner peripheral surface 102 thereof in contact with the small-diameter outer peripheral surface 32 of the corresponding elongated member 6. One elongated member 6 is adapted to be connected to the bridge pier A via the mounting plate 36 by the projecting portion 35 projecting outside the circular tubular member 3, and the other elongated member 6 is adapted to be connected to the bridge pier B via the mounting plate 36 by the projecting portion 35 projecting outside the circular tubular member 3.

Furthermore, in the vibration damping device for a structure 1 shown in Fig. 7, the small-diameter inner peripheral surface 21 in the inner peripheral surface 2 of the circular tubular member 3 is provided in a central portion of the circular tubular member 3 in the direction X, and the internally threaded inner peripheral surfaces 24 in the inner peripheral surface 2 of the circular tubular member 3 are provided at both end portions in the direction X of the circular tubular member 3 with the small-diameter inner peripheral surface 21 located therebetween in the direction X. On the respective outer peripheral surface 101 side, each of the pair of elastic bodies 71 is sandwiched by the circular tubular member 3 at the small-diameter inner peripheral surface 21 thereof and by each of the pair of internal-thread meshing members 41 meshing with the respective internally threaded inner peripheral surface 24, while, on the respective inner peripheral surface 102 side, each of the pair of elastic bodies 71 is sandwiched by the corresponding elongated member 6 at the large-diameter outer peripheral surface 31 thereof and by the annular external-thread meshing member 42 meshing with the externally threaded outer peripheral surface 34. Thus, on the respective outer peripheral surface 101 side, each of the pair of elastic bodies 71 is fixed to the circular tubular member 3 immovably in the direction X with respect to the circular tubular member 3, while, on the respective inner peripheral surface 102 side, each of the pair of elastic bodies 71 is fixed to the elongated member 6 immovably in the direction X with respect to the elongated member 6.

In the vibration damping device for a structure 1 shown in Fig. 7, when the bridge pier B, to which the other elongated member 6 is connected via the mounting plate 36 formed integrally on the projecting portion 35 of the other elongated member 6, relatively moves in one direction in the direction X with respect to the bridge pier A, to which one elongated member 6 is connected via the mounting plate 36 formed integrally on the projecting portion 35 of the one elongated member 6, the pair of elastic bodies 71, as shown in Fig. 8, are caused to undergo shear deformation in mutually opposite directions in the direction X, and the relative movement of the bridge girder B in the direction X with respect to the bridge pier A is attenuated by this shear deformation in the mutually opposite directions. In consequence, the relative movement in the one and other directions in the direction X, i.e., the vibration in the direction X, of the bridge girder B with respect to the bridge pier A is damped. Moreover, each of the lead plate 73 is also caused to undergo plastic deformation in the one and other directions by the vibration. As a result, according to the vibration damping device for a structure 1 shown in Fig. 7, in the same way as the vibration damping device for a structure 1 shown in Figs. 1 to 3, it is possible to reduce the difference between the amount of shear deformation in the direction X of a corresponding elastic body 71 on the small-diameter outer peripheral surface 32 side of the respective elongated member 6 and the amount of shear deformation in the direction X of the respective elastic body 71 on the large-diameter inner peripheral surface 22 side of the circular tubular member 3, making it possible to reduce early deterioration of the small-diameter outer peripheral surface 32 side of the respective elongated member 6 due to the mechanical fatigue of the corresponding elastic body 71. Furthermore, in comparison with the vibration damping device for a structure 1 shown in Figs. 1 to 3, the relative vibration in the direction X of the bridge girder B with respect to the bridge pier A can be damped in an earlier period by the plastic deformation of the pair of lead plates 73. Moreover, in comparison with the vibration damping devices for a structure 1 shown in Figs. 1 to 3 and Fig. 6, it is possible to respond to the relative vibrational amplitude of a magnitude twice as large in the one and other directions in the direction X of the bridge girder B with respect to the bridge pier A. Hence, the vibration damping device for a structure 1 shown in Fig. 7 is capable of enlarging the operational range in the direction X, i.e., the amount of extension and contraction in the direction X which permits proper operation.

### DESCRIPTION OF REFERENCE NUMERALS AND SIGNS

- 1:: vibration damping device for a structure
- 2, 9:: inner peripheral surface
- 3:: circular tubular member
- 5, 8:: outer peripheral surface
- 6:: elongated member
- 10:: elastic body

## Claims

1. A vibration damping device for a structure which is interposed between one structure and another structure disposed relatively movably with respect to the one structure so as to damp the relative vibration of the other structure with respect to the one structure in a relatively moving direction of the other structure with respect to the one structure, comprising:
a tubular body;
an elongated body disposed in said tubular body relatively movably with respect to said tubular body; and
a tubular elastic body which has an outer peripheral surface fixed to an inner peripheral surface of said tubular body and an inner peripheral surface fixed to an outer peripheral surface of said elongated body, and which is disposed between the inner peripheral surface of said tubular body and the outer peripheral surface of said elongated body,
wherein a shear modulus of elasticity of said elastic body becomes gradually smaller in a direction from the outer peripheral surface of said elongated body toward the inner peripheral surface of said tubular body.

2. The vibration damping device for a structure according to claim 1, wherein said tubular body is constituted by a tubular member having a circular tubular inner peripheral surface.

3. The vibration damping device for a structure according to claim 1 or 2, wherein said elongated body is constituted by an elongated member having at least one of a circular tubular outer peripheral surface and a rectangular tubular outer peripheral surface.

4. The vibration damping device for a structure according to any one of claims 1 to 3, wherein said tubular body includes a circular tubular member small-diameter inner peripheral surface, a circular tubular member large-diameter inner peripheral surface larger in diameter than the small-diameter inner peripheral surface, and an internally threaded inner peripheral surface which sandwiches the cylindrical large-diameter inner peripheral surface in the moving direction in cooperation with the small-diameter inner peripheral surface and on which an internal thread is formed, and said elastic body at the outer peripheral surface thereof is disposed in contact with the large-diameter inner peripheral surface of said tubular body, is sandwiched in the moving direction between said tubular body at the small-diameter inner peripheral surface thereof and an annular internal-thread meshing member meshing with the internally threaded inner peripheral surface, and is fixed at the outer peripheral surface thereof to said tubular body immovably in the moving direction with respect to said tubular body.

5. The vibration damping device for a structure according to any one of claims 1 to 3, wherein said tubular body includes a circular tubular member inner peripheral surface and a pair of internally threaded inner peripheral surfaces which sandwich the inner peripheral surface in the moving direction and on each of which an internal thread is formed, and said elastic body at the outer peripheral surface thereof is disposed in contact with the inner peripheral surface of said tubular body, is sandwiched in the moving direction between a pair of internal-thread meshing members meshing with the pair of internally threaded inner peripheral surfaces, and is fixed at the outer peripheral surface thereof to said tubular body immovably in the moving direction with respect to said tubular body.

6. The vibration damping device for a structure according to any one of claims 1 to 5, wherein said elongated body includes a circular tubular member large-diameter outer peripheral surface, a circular tubular member small-diameter outer peripheral surface smaller in diameter than the large-diameter outer peripheral surface, and a circular tubular member externally threaded outer peripheral surface which sandwiches the small-diameter outer peripheral surface in the moving direction in cooperation with the large-diameter outer peripheral surface and on which an external thread is formed, and said elastic body at the inner peripheral surface thereof is disposed in contact with the small-diameter outer peripheral surface, is sandwiched in the moving direction between said elongated body at the large-diameter outer peripheral surface thereof and an external-thread meshing member meshing with the externally threaded outer peripheral surfaces, and is fixed at the inner peripheral surface thereof to said elongated body immovably in the moving direction with respect to said elongated body.

7. The vibration damping device for a structure according to any one of claims 1 to 6, wherein said elastic body includes a plurality of circular tubular member elastic layers disposed concentrically with each other and a plurality of rigid layers which are alternately arranged with the plurality of elastic layers in a radial direction perpendicular to the moving direction, an outermost one of the plurality of rigid layers has the outer peripheral surface fixed to the inner peripheral surface of said tubular body, and an innermost one of the plurality of rigid layers has the inner peripheral surface fixed to the outer peripheral surface of said elongated body.

8. The vibration damping device for a structure according to claim 7, wherein at least one of the outermost and innermost rigid layers is constituted by a circular tubular or a rectangular tubular rigid plate.

9. The vibration damping device for a structure according to claim 7 or 8, wherein intermediate rigid layers excluding the outermost rigid layer and the innermost rigid layer among the plurality of rigid layers are constituted by at least one of circular tubular rigid plates and strip-shaped rigid plates.

10. The vibration damping device for a structure according to claim 9, wherein the strip-shaped rigid plates are arranged in such a manner as to surround said elongated body.

11. The vibration damping device for a structure according to any one of claims 7 to 10, wherein, among the plurality of elastic layers, one elastic layer has a shear modulus of elasticity which is smaller than a shear modulus of elasticity of another elastic layer disposed more inwardly of the one elastic layer in a radial direction directed from the outer peripheral surface of said elongated body toward the inner peripheral surface of said tubular body.

12. The vibration damping device for a structure according to any one of claims 1 to 6, wherein said elastic body includes a first elastic body portion and a second elastic body portion arranged in the moving direction and a plastically deformable metallic body interposed between the first elastic body portion and the second elastic body portion in the moving direction, respective shear modulus of elasticity of the first elastic body portion and the second elastic body portion become smaller in the direction from the outer peripheral surface of said elongated body toward the inner peripheral surface of said tubular body, the metallic body has one end face in the moving direction brought into contact with one end face in the moving direction of the first elastic body portion and another end face in the moving direction brought into contact with one end face in the moving direction of the second elastic body portion, and is sandwiched in the moving direction by the first elastic body portion and the second elastic body portion.

13. The vibration damping device for a structure according to claim 12, wherein at least one of the first elastic body portion and the second elastic body portion includes a plurality of circular tubular member elastic layers disposed concentrically with each other and a plurality of rigid layers which are alternately arranged with the plurality of elastic layers in a radial direction perpendicular to the moving direction, an outermost one of the plurality of rigid layers of the at least one of the first elastic body portion and the second elastic body portion has the outer peripheral surface fixed to the inner peripheral surface of said tubular body, and an innermost one of the plurality of rigid layers of the at least one of the first elastic body portion and the second elastic body portion has the inner peripheral surface fixed to the outer peripheral surface of said elongated body.

14. The vibration damping device for a structure according to claim 13, wherein the outermost and innermost rigid layers of the at least one of the first elastic body portion and the second elastic body portion are constituted by circular tubular rigid plates.

15. The vibration damping device for a structure according to claim 13, wherein the outermost and innermost rigid layers of the at least one of the first elastic body portion and the second elastic body portion are constituted by rectangular tubular rigid plates.

16. The vibration damping device for a structure according to any one of claims 12 to 14, wherein intermediate rigid layers excluding the outermost rigid layer and the innermost rigid layer among the plurality of rigid layers of the at least one of the first elastic body portion and the second elastic body portion are constituted by at least one of circular tubular rigid plates and strip-shaped rigid plates.

17. The vibration damping device for a structure according to claim 16, wherein the strip-shaped rigid plates are arranged in such a manner as to surround said elongated body.

18. The vibration damping device for a structure according to any one of claims 12 to 17, wherein, among the plurality of elastic layers of the at least one of the first elastic body portion and the second elastic body portion, one elastic layer has a shear modulus of elasticity smaller than a shear modulus of elasticity of an elastic layer disposed radially inwardly of the one elastic layer.

19. The vibration damping device for a structure according to any one of claims 12 to 18, wherein the metallic body is constituted by at least one of an annular lead plate having lead as a principal component and an annular tin plate having tin as a principal component.

20. The vibration damping device for a structure according to any one of claims 12 to 19, wherein the metallic body is constituted by a circular plate or a rectangular plate.

21. The vibration damping device for a structure according to any one of claims 1 to 20, wherein said tubular body is adapted to be connected to the one structure, and said elongated body is adapted to be connected to the other structure at a projecting portion thereof projecting outside said tubular body.

22. The vibration damping device for a structure according to any one of claims 1 to 20 in which said elongated body is adapted to be connected to the one structure at a projecting portion thereof projecting outside said tubular body, further comprising:
another elongated body disposed in said tubular body relatively movably in the moving direction with respect to said tubular body, and arranged in series to said elongated body in the moving direction; and
another annular elastic body which is fixed at an outer peripheral surface thereof to the inner peripheral surface of said tubular body and fixed at an inner peripheral surface thereof to an outer peripheral surface of said other elongated body and which is disposed between the inner peripheral surface of said tubular body and the outer peripheral surface of said other elongated body, said other elongated body being adapted to be connected to the other structure at a projecting portion thereof projecting outside said tubular body.

23. The vibration damping device for a structure according to claim 22, wherein said other elastic body has a shear modulus of elasticity which becomes smaller in the direction from the outer peripheral surface of said other elongated body toward the inner peripheral surface of said tubular body.

24. The vibration damping device for a structure according to claim 22 or 23, wherein said other elongated body is constituted by an elongated member having at least one of a circular tubular outer peripheral surface and a rectangular tubular outer peripheral surface.
